# EUROPÄISCHE PATENTSCHRIFT

(11) **EP 3 942 192 B1**
(45) Veröffentlichungstag und Bekanntmachung des Hinweises auf die Patenterteilung: **10.06.2026**
(21) Anmeldenummer: 20709619.9
(22) Anmeldetag: 13.03.2020
(51) Int. Cl.: F16F 1/371, F16F 1/40

(54) **FEDERELEMENT UND BRANDHEMMENDE DECKSCHICHT**
SPRING ELEMENT AND FIREPROOF COATING
ÉLÉMENT RESSORT ET COUCHE DE REVÊTEMENT RÉSISTANT AU FEU

(30) Priorität: 22.03.2019 EP 19164577
(43) Veröffentlichungstag der Anmeldung: 26.01.2022
(73) Patentinhaber: GMT Gummi-Metall-Technik GmbH, 77815 Bühl (DE)
(72) Erfinder: KERN, Jakob, 76139 Karlsruhe (DE); PICKARD, Marcus, 77815 Bühl (DE); MEIER, Martin, 77833 Ottersweier (DE); LÜERSSEN, Erik, 76137 Karlsruhe (DE)
(74) Vertreter: Maucher Jenkins Patent- und Rechtsanwälte
(86) Internationale Anmeldenummer: PCT/EP2020/056993
(87) Internationale Veröffentlichungsnummer: WO 2020/193241

(56) Entgegenhaltungen:
- WO-A1-2018/046150
- DE-A1- 102013 017 571
- DE-U1- 202017 006 889
- JP-A- H0 429 638
- US-A1- 2017 267 260

## Beschreibung

Die Erfindung betrifft ein Federelement zur Schwingungsdämpfung und/oder Federung, mit wenigstens einem elastischen Dämpfungskörper und einer auf dem Dämpfungskörper angeordneten, brandhemmenden Deckschicht.

Speziell im Schienenfahrzeugbereich sind die Ansprüche an das Brandverhalten von eingesetzten Federelementen besonders hoch. Durch diese müssen beispielsweise spezielle Brandschutzanforderungen nach der DIN EN 45545-2 erfüllt sein. Da die mechanischen Anforderungen an die Federelemente insbesondere im Fahrwerkbereich jedoch sehr hoch sind, ist es regelmäßig erforderlich, dass auf Dämpfungskörper zurückgegriffen werden muss, die Stöße und/oder Schwingungen besonders gut absorbieren und somit dämpfen können. Derartig elastisch ausgestaltete Dämpfungskörper können daher beispielsweise aus Gummimischungen hergestellt sein, die einen relativ hohen Anteil an brennbaren Stoffen, wie beispielsweise Naturkautschuk, aufweisen. Ein Federelement mit einem Dämpfungskörper, der einen hohen Anteil an Naturkautschuk aufweist, würde jedoch aufgrund seines schlechten Brandverhaltens die DIN EN 45545-2 nicht erfüllen.

Man kennt bereits Dämpfungskörper, die aus alternativen, schlecht brennbaren Gummimischungen hergestellt sind. Diese können beispielsweise brandhemmende Zusatzstoffe enthalten, durch welche das Brandverhalten des Dämpfungskörpers verbessert wird. Häufig zeigen diese Federelemente den Nachteil, dass ihre mechanischen Eigenschaften des Dämpfungskörpers negativ beeinträchtigt sind. Beispielsweise kann es dann vorkommen, dass eine geforderte Einsatzdauer der Federelemente nicht mehr erreicht werden kann, da der Verschleiß aufgrund der beeinträchtigten mechanischen Eigenschaften zu groß ist, so dass diese früher ausgetauscht werden müssen.

Man hat zudem bereits versucht, einen Dämpfungskörper durch eine brandhemmende Deckschicht vor Feuer zu schützen. Die dabei verwendeten Deckschichten weisen jedoch selbst ebenfalls schlechtere mechanische Eigenschaften auf, was dazu führen kann, dass eine brandhemmende Deckschicht ebenfalls relativ schnell verschleißt und somit auch hier eine geforderte Einsatzdauer des Federelements nicht erreicht werden kann. Dies kann beispielsweise darauf zurückzuführen sein, dass die Deckschicht weniger elastisch als der von ihr abgedeckte Dämpfungskörper ist und es daher bei einer Kompression des Dämpfungskörpers zu einer Faltenbildung in der Deckschicht kommt. Dadurch können bei längerem Gebrauch Risse und andere Schäden an der Deckschicht entstehen, so dass die Gefahr besteht, dass ein gefordertes Brandschutzverhalten des Federelements nicht eingehalten werden kann.

US 2017/267260 A1 offenbart eine Antivibrationsvorrichtung, die zum Beispiel für eine Eisenbahnanwendung bestimmt ist, umfassend einen ersten Rahmen, einen zweiten Rahmen, eine stoßdämpfende Struktur für die Schwingungen, die zwischen den beiden Rahmen angeordnet ist, und eine Feuerbarriereschicht, die die stoßdämpfende Struktur zumindest teilweise bedeckt. Die Feuerbarriereschicht ist ein Polychloropren-basiertes Elastomer, das Aluminiumoxidtrihydrat oder Magnesiumhydroxid als Feuerhemmungsmittel enthält.

WO 2018/046150 A1 betrifft einen Artikel mit einem Grundkörper aus einem polymeren Werkstoff mit elastischen Eigenschaften, wobei der Grundkörper eine Artikeloberfläche besitzt, die vollständig oder teilweise mit wenigstens einem Überzug versehen ist, wobei der Überzug aus wenigstens einer Kautschukmischung gebildet wird und wobei die

Kautschukmischung des Überzugs wenigstens ein Flammschutzmittel enthält oder von sich aus flammhemmend ist.

DE 20 2017 006 889 U1 betrifft ein Elastomer-Metall-Lager als Lagerbauteil mit bauteilintegriertem Elastomermaterial-Brandschutz. Das Elastomer-Metall-Lager weist mehrere zwischen Metallelementen konisch angeordnete Elastomerelemente auf, die zwischen einem metallischen Konusteil und einem metallischen Schalenteil angeordnet sind. An den Außenseiten des metallischen Schalenteils sowie an dem Zwischenblechüberstand sind jeweils ein HEABM-Ringteil angeordnet.

JP H04 29638 A betrifft ein Federelement mit einem elastischen Dämpfungskörper, der nach außen hin durch eine brandhemmende Deckschicht abgeschirmt ist.

US 2017/0267260 offenbart eine schwingungsdämpfende Vorrichtung mit einer Schwingungsdämpfungsstruktur, die zwischen zwei Armaturen positioniert ist. Die Vorrichtung hat eine Feuersperrschicht aus einem Elastomer auf Basis von Polychloropren, wobei die Feuersperrschicht mindestens teilweise die Dämpfungsstruktur (30) abdeckt und ein feuerbeständiges Mittel, ausgewählt aus dem AluminiumoxidTrihydrat oder dem Magnesiumhydroxid, enthält.

Es besteht somit die Aufgabe, ein Federelement bereitzustellen, wobei die Gebrauchseigenschaften des Federelements gegenüber vorbekannten Federelementen verbessert ist.

Die Lösung dieser Aufgabe wird erfindungsgemäß durch ein Federelement mit den Merkmalen gemäß Anspruch 1 bereitgestellt. Insbesondere wird zur Lösung der oben genannten Aufgabe ein Federelement eingangs genannter Art vorgeschlagen, wobei die Deckschicht wenigstens eine Ausgleichszone aufweist, die im belasteten Zustand des Federelements zusammengedrückt wird, so dass eine Faltenbildung der Deckschicht verhindert wird. Insbesondere kann eine Faltenbildung bei einem maximalen Belastungszustand des Federelements verhindert werden. Dies hat den Vorteil, dass Dämpfungskörper vorbekannter Art, die beispielsweise aus Gummimischungen auf Basis von Naturkautschuk hergestellt sein können und somit gute mechanische Eigenschaften aufweisen, in Federelementen verwendet werden können, die dennoch die DIN EN 45545-2 aufgrund der brandhemmenden Deckschicht erfüllen. Gleichzeitig erfüllt nun auch die Deckschicht die mechanischen Anforderungen, die gerade im Schienenfahrzeugbau aufgrund der hohen Belastungen, die auf die Federungs- und/oder Schwingungsdämpfungsbauteile wirken, anfallen. Aufgrund der wenigstens einen Ausgleichszone weist die Oberflächenkontur des Federelements eine spezielle Geometrie auf, durch welche eine Faltenbildung der Deckschicht im belasteten Zustand des Federelements verhindert wird. Die Ausgleichszone reagiert somit in der Art einer Pufferzone, in welche die Deckschicht ohne Faltenbildung zusammengeschoben werden kann, wenn eine Kompression des Dämpfungskörpers erfolgt, um eine zu hohe mechanische Belastung der Deckschicht vermeiden zu können, die zu einem zu schnellen Verschleiß oder zu Schäden an der Deckschicht führen kann.

Nachfolgend werden vorteilhafte Ausgestaltungen der Erfindung beschrieben, die allein oder in Kombination mit den Merkmalen anderer Ausgestaltungen optional zusammen mit den Merkmalen nach Anspruch 1 kombiniert werden können.

Die Ausgleichszone ist erfindungsgemäß durch eine Unterbrechung der Deckschicht ausgebildet. Vorzugsweise kann die Deckschicht wenigstens zwei, im unbelasteten Zustand des Federelements durch einen Freiraum in einem Abstand voneinander getrennt angeordnete Deckschichtbereiche aufweisen. Somit können die Deckschichtbereiche aufgrund des dazwischenliegenden Freiraums im belasteten Zustand zusammengeschoben werden, so dass eine Faltenbildung verhindert wird. Bei Belastung des Federelements wird die brandhemmende Deckschicht geschlossen, so dass die brandhemmende Wirkung der Deckschicht intakt bleibt. Insbesondere kann die Deckschicht mehrere Ausgleichszonen aufweisen.

Um eine besonders gute mechanische Belastbarkeit des Federelements erreichen zu können, ist die Deckschicht und der Dämpfungskörper zu einem Verbundelement untrennbar vernetzt. Somit kann besser verhindert werden, dass sich die Deckschicht insbesondere bei hohen Belastungen des Federelements vom Dämpfungskörper löst, so dass die Brandschutzwirkung der Deckschicht ausfällt. Die Vernetzung der Deckschicht und des Dämpfungskörpers kann beispielsweise durch die an sich bekannte Vulkanisation erfolgen. Vorzugsweise kann durch die Vernetzung die Ausbildung von kovalenten Bindungen zwischen der Deckschicht und dem Dämpfungskörper erreicht werden. Untrennbar vernetzt im Sinne der Erfindung kann sich darauf beziehen, dass die beiden Teile sich nicht zerstörungsfrei voneinander trennen lassen.

Gemäß einer weiteren vorteilhaften Ausgestaltung des Federelements kann der Dämpfungskörper aus einem Gummiwerkstoff hergestellt sein, wobei die Elastizität des Gummiwerkstoffes des Dämpfungskörpers höher als die Elastizität der Deckschicht sein kann. Somit ist es möglich, vorbekannte Dämpfungskörper einzusetzen, die aus Gummimischungen hergestellt sind, welche an sich brennbar sind und ein gefordertes Brandschutzverhalten ohne die Deckschicht nicht einhalten könnten.

Gemäß einer besonders vorteilhaften Ausgestaltung kann die wenigstens eine Deckschicht teilweise oder größtenteils aus einem Elastomer hergestellt sein. Insbesondere kann die wenigstens eine Deckschicht wenigstens teilweise aus Chloropren-Kautschuk hergestellt sein. Es hat sich gezeigt, dass insbesondere Chloropren-Kautschuk besonders gute Brandschutzeigenschaften aufweist. Allerdings ist die Verwendung von Chloropren-Kautschuk für eine Deckschicht grundsätzlich nicht geeignet, da ihre mechanischen Eigenschaften in Bezug auf die Festigkeit und Dehnbarkeit nicht ausreichen, um die hohen Belastungen insbesondere bei Schienenfahrzeugen auszuhalten. So kann es an der Oberfläche eines mit einer Deckschicht auf Basis von Chloropren-Kautschuk beschichteten Dämpfungskörpers zu Rissen in der Deckschicht kommen. Aufgrund der in der Deckschicht ausgebildeten wenigstens einen Ausgleichszone ist es jedoch möglich, eine solche Rissbildung zu vermeiden. Überraschenderweise konnte sogar festgestellt werden, dass ein derart ausgestaltetes Federelement besonders gute mechanische Eigenschaften und zudem ein gutes Brandschutzverhalten aufweist.

Um eine ungewollte Säurebildung und/oder Bildung von toxischem Rauchgas im Brandfall besser vermeiden zu können, kann die Deckschicht wenigstens ein Flammschutz- und/oder Säurefängermittel umfassen. Beispielsweise kann das wenigstens eine Flammschutz- und/oder Säurefängermittel eines oder eine Kombination aus zwei oder mehr als zwei Flammschutz- und/oder Säurefängermitteln ausgewählt aus der Gruppe aus phosphorhaltigen Verbindungen, insbesondere Ammoniumpolyphosphat (APP), stickstoffhaltige Verbindungen, insbesondere Melamin, Polyol-Verbindungen, insbesondere Pentaerythrit, phosphathaltige Weichmacher, insbesondere Disflamoll DPO, anorganische Flammschutz- und/oder Säurefängermittel aus der Gruppe der Borate, insbesondere Zinkborat, der Gruppe der Hydroxide, insbesondere Aluminiumtrihydroxid und/oder Magnesiumhydroxid und/oder Boehmit, der Gruppe der Antimonverbindungen, insbesondere Antimontrioxid und/oder Antimonpentoxid, der Gruppe der Oxide, insbesondere Magnesiumoxid, der Gruppe der Nanoclays, Graphit, insbesondere expandierbares Graphit, sein.

Um gute mechanische Eigenschaften eines Federelements bei gleichzeitig langer Lebensdauer des Federelements erreichen zu können, kann die Deckschicht, insbesondere außerhalb der Ausgleichszone, eine durchschnittliche Schichtstärke von 1 Millimeter bis 5 Millimeter aufweisen. Insbesondere kann vorgesehen sein, dass die Deckschicht maximal 4 Millimeter dick ausgebildet ist, insbesondere dass die Deckschicht maximal 3 Millimeter dick ausgebildet ist, insbesondere dass die Deckschicht maximal 2 Millimeter dick ausgebildet ist, insbesondere dass die Deckschicht maximal 1 Millimeter dick ausgebildet ist.

Gemäß einer weiteren vorteilhaften Ausgestaltung kann es vorgesehen sein, dass die Deckschicht, insbesondere im eingebauten Zustand des Federelements, eine Außenschicht des Federelements ausbildet.

Gemäß einer vorteilhaften Weiterbildung des Federelements kann die wenigstens eine Ausgleichszone derart eingerichtet sein, dass sie im Belastungszustand, insbesondere im maximalen Belastungszustand, teilweise oder vollständig geschlossen und/oder zusammengeschoben ist, so dass eine nach außen geschlossene Deckschicht vorliegt.

Gemäß einer besonders vorteilhaften Weiterbildung kann es sich bei dem Federelement um ein Federelement zur Schwingungsdämpfung und/oder Federung von Schienenfahrzeugen handeln. Beispielsweise kann es sich bei dem Federelement um wenigstens ein Federelement aus der Gruppe aus hochbelasteten Bauteilen, wie Primär-Konusfeder, Sekundärzusatzfeder, Achsfeder und/oder Luftfederbalg handeln.

Eine brandhemmende Deckschicht für ein Federelement kann wenigstens eine Ausgleichszone aufweisen. Dies hat den Vorteil, dass die Deckschicht nicht derart elastisch ausgebildet sein muss, um aufgrund ihrer Elastizität die mechanischen Anforderungen zu erfüllen. Da die Deckschicht keine Federung- oder Dämpfungswirkung übernimmt, kann sie somit steifer, als ein Dämpfungskörper auf den sie aufgetragen werden kann, ausgebildet sein.

Nachfolgend werden vorteilhafte Ausgestaltungen der Erfindung beschrieben, die allein oder in Kombination mit den Merkmalen anderer Ausgestaltungen kombiniert werden können. Die in Bezug auf die brandhemmende Deckschicht geltenden Vorteile sind im Wesentlichen dieselben, die bereits in Bezug auf die Merkmale des Federelements beschrieben wurden.

Es ist vorgesehen, dass die Ausgleichszone durch eine Unterbrechung der Deckschicht ausgebildet ist. Weiter ist erfindungsgemäß vorgesehen, dass die Deckschicht wenigstens zwei, im unbelasteten Zustand der Deckschicht durch einen Freiraum in einem Abstand voneinander getrennt angeordnete Deckschichtbereiche aufweist. Insbesondere kann die Deckschicht mehrere Ausgleichszonen aufweisen.

Bei der brandhemmenden Deckschicht kann ferner vorgesehen sein, dass diese teilweise oder größtenteils aus einem Elastomer hergestellt ist. Es kann insbesondere vorgesehen sein, dass die Deckschicht teilweise oder größtenteils aus Chloropren-Kautschuk hergestellt ist.

Dabei kann es vorgesehen sein, dass ein die Deckschicht repräsentierender Prüfkörper eine Zugfestigkeit von mindestens 4,0 MPa, insbesondere von mindestens 5,0 MPa, insbesondere von mindestens 6,0 MPa, insbesondere von mindestens 7,0 MPa, insbesondere von mindestens 8,0 Mpa, insbesondere von mindestens 9,0 MPa, oder höher aufweist, vorzugsweise wobei die Zugfestigkeit gemäß dem Prüfverfahren nach den Normen ISO 37 und DIN 53504 geprüft wurde.

Weiter kann es vorgesehen sein, dass ein die Deckschicht repräsentierender Prüfkörper einen Elastizitätsmodul (100%) von wenigstens 1,0 MPa, insbesondere von wenigstens 1,2 MPa, insbesondere von wenigstens 1,4 MPa, oder mehr aufweist und/oder dass die Deckschicht einen Elastizitätsmodul (200%) von wenigstens 1,6 MPa, von wenigstens 1,8 MPa, insbesondere von wenigstens 2,0 MPa, oder mehr aufweist und/oder dass die Deckschicht einen Elastizitätsmodul (300%) von wenigstens 2,0 MPa, von wenigstens 2,2 MPa, insbesondere von wenigstens 2,4 MPa, insbesondere von wenigstens 2,6, oder mehr aufweist.

Ferner kann es vorgesehen sein, dass die Deckschicht eine Ozonrissbildung der Stufe 0 aufweist, insbesondere wobei die Ozonrissbildung gemäß der Prüfungsnorm DIN ISO 1431-1 bestimmt ist.

Weiter kann es vorgesehen sein, dass ein Maximalwert einer durchschnittlichen Wärmefreisetzung (MAHRE Wert) eines die Deckschicht repräsentierenden Prüfkörpers maximal 90 kWm-2, insbesondere maximal 75 kWm-2, insbesondere maximal 50 kWm-2, insbesondere maximal 40 kWm-2, insbesondere maximal 30 kWm-2, insbesondere maximal 25 kWm-2, insbesondere maximal 20 kWm-2, oder weniger beträgt, vorzugsweise wobei der MAHRE Wert gemäß der Prüfungsvorschrift EN ISO 5660-1 bei einer Bestrahlungsstärke von 25 kW/m2 bestimmt ist.

Weiter kann es vorgesehen sein, dass ein die Deckschicht repräsentierender Prüfkörper eine Gefährdungsklasse (CITG-Wert) von maximal 1,8, insbesondere von maximal 1,5, insbesondere von maximal 1,2, insbesondere von maximal 1,0, oder weniger aufweist, und/oder dass eine Rauchgasdichte maximal 600, insbesondere maximal 300, insbesondere maximal 200, insbesondere maximal 100, oder weniger beträgt, vorzugsweise wobei die Gefährdungsklasse (CITG-Wert) und/oder die Rauchgasdichte (Ds,max) gemäß dem Prüfverfahren EN ISO 5659-2 bei einer Bestrahlungsstärke von 25 kW/m2 bestimmt ist/sind.

Gemäß einer weiteren vorteilhaften Ausgestaltung kann es vorgesehen sein, dass die Deckschicht wenigstens ein Flammschutz- und/oder Säurefängermittel umfasst, insbesondere wobei das wenigstens eine Flammschutz- und/oder Säurefängermittel eines oder eine Kombination aus zwei oder mehr als zwei Flammschutz- und/oder Säurefängermitteln ausgewählt aus der Gruppe aus phosphorhaltigen Verbindungen, insbesondere Ammoniumpolyphosphat (APP), stickstoffhaltige Verbindungen, insbesondere Melamin, Polyol-Verbindungen, insbesondere Pentaerythrit, phosphathaltige Weichmacher, insbesondere Disflamoll DPO, anorganische Flammschutz- und/oder Säurefängermittel aus der Gruppe der Borate, insbesondere Zinkborat, der Gruppe der Hydroxide, insbesondere Aluminiumtrihydroxid und/oder Magne¬siumhydroxid und/oder Boehmit, der Gruppe der Antimonverbin¬dungen, insbesondere Antimontrioxid und/oder Antimonpento¬xid, der Gruppe der Oxide, insbesondere Magnesiumoxid, der Gruppe der Nanoclays, Graphit, insbesondere expandierbares Graphit, ist.

Dabei kann es beispielsweise vorgesehen sein, dass ein Massenanteil des wenigstens einen Flammschutz- und/oder Säurefängermittels an der Zusammensetzung er Deckschicht von 30 % bis 70 % beträgt, dass ein Massenanteil des Chloropren-Kautschuks von 30 % bis 70% beträgt, und dass ein Massenanteil wenigstens einer zusätzlichen Komponente von 0 % bis 15 % beträgt, wobei die Summe aller Komponenten wenigstens 60 % und höchstens 100 % ergibt. Vorzugsweise kann die Deckschicht als wenigstens eine zusätzliche Komponente ein Vernetzungssmittel aufweisen.

Die oben genannte Aufgabe kann zudem durch eine Verwendung eines Federelements, wie es hierin beschrieben und beansprucht ist, zur Schwingungsdämpfung und/oder Federung von Schienenfahrzeugen gelöst werden. Vorzugsweise kann es sich um wenigstens ein Federelement aus der Gruppe aus hochbelasteten Bauteilen, wie Primär-Konusfeder, Sekundärzusatzfeder, Achsfeder und/oder Luftfederbalg handeln. Wie eingangs bereits beschrieben wurde, ist es gerade im Schienenfahrzeugbereich erforderlich, Bauteile zu verwenden, die hohe mechanische Belastungen aushalten und gleichzeitig ein gefordertes Brandschutzverhalten aufweisen. Somit eignet sich das hierin beschriebene und beanspruchte Federelement besonders zum Einsatz im Schienenfahrzeugbereich.

Die oben genannte Aufgabe kann zudem durch eine Verwendung einer brandhemmenden Deckschicht, wie sie hierin beschrieben ist, zur Beschichtung eines Federelements zur Schwingungsdämpfung und/oder Federung von Schienenfahrzeugen gelöst werden. Für eine solche Verwendung wird allerdings kein eigenständiger Schutz beansprucht. Vorzugsweise kann es sich um wenigstens ein Federelement aus der Gruppe aus hochbelasteten Bauteilen, wie Primär-Konusfeder, Sekundärzusatzfeder, Achsfeder und/oder Luftfederbalg handeln.

Die Erfindung wird nun anhand mehrerer Ausführungsbeispiele näher beschrieben, ist jedoch nicht auf diese Ausführungsbeispiele beschränkt. Weitere Ausführungsbeispiele ergeben sich durch die Kombination der Merkmale einzelner oder mehrerer Ansprüche untereinander und/oder mit einzelnen oder mehreren Merkmalen der Ausführungsbeispiele.

Es zeigt:
- Fig. 1: eine Gesamtübersicht einer längs geschnittenen Ausführungsvariante eines erfindungsgemäßen Federelements in unbelastetem Zustand, wobei das Federelement als eine Konusfeder ausgebildet ist,
- Fig. 2: eine Detailansicht einer Ausgleichszone in einer Deckschicht des unbelasteten Federelements aus Fig. 1, wobei die Deckschicht durch eine Aussparung in der Deckschicht ausgebildet ist,
- Fig. 3: eine Gesamtübersicht der längs geschnittenen Ausführungsvariante eines erfindungsgemäßen Federelements aus Fig. 1 diesmal in belastetem Zustand,
- Fig. 4: eine Detailansicht der Ausgleichszone in einer Deckschicht des belasteten Federelements aus Fig. 3, wobei die zuvor durch einen Freiraum getrennten Deckschichtbereiche der Deckschicht im Bereich der Ausgleichszone zusammengeschoben sind, so dass eine geschlossene Deckschicht ausgebildet ist.

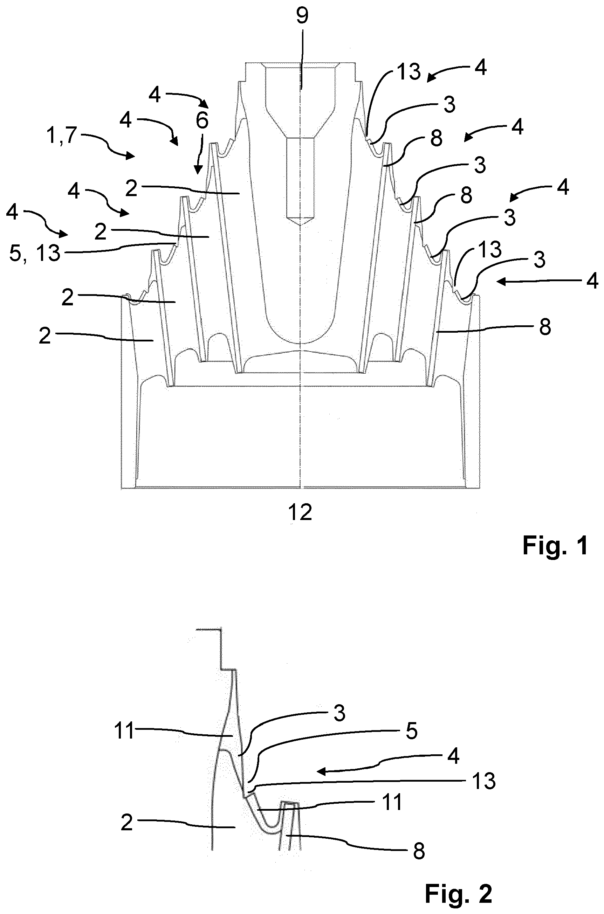

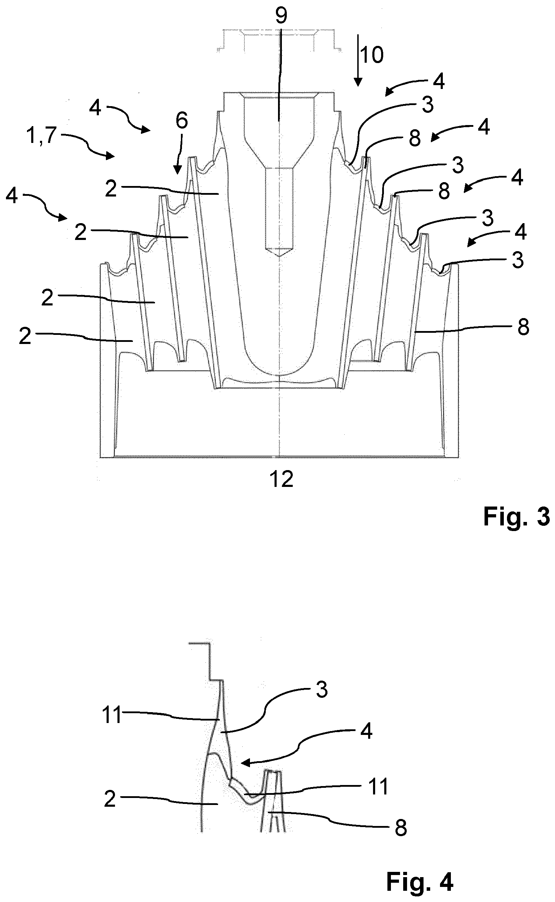

In den Figuren 1 und 4 ist eine mögliche Ausgestaltungsvariante eines im Ganzen als 1 bezeichneten Federelements gezeigt. Bei der in den Figuren dargestellten Ausgestaltungsvariante handelt es sich um eine Konusfeder 11. Die Erfindung kann daher zum Beispiel bei Bauteilen zur Primärfederung im Fahrwerk eines Schienenfahrzeugs realisiert sein. Die Erfindung kann jedoch auch beispielsweise bei anderen Bauteilen, die insbesondere zur Federung und/oder Schwingungsdämpfung von Schienenfahrzeugen dienen, verwirklicht sein. Die dargestellte Ausführungsvariante ist somit nur als ein mögliches Beispiel zu verstehen und dient damit in erster Linie lediglich zur besseren Erläuterung der Erfindung.

Das Federelement 1 weist mehrere elastische Dämpfungskörper 2 auf, die jeweils eine brandhemmende Deckschicht 3 tragen.

Geeignete Materialien und Zusammensetzungen zur Herstellung von Dämpfungskörpern 2 sind bereits bekannt und können auch in Verbindung mit der vorliegenden Erfindung eingesetzt werden. Beispielsweise sind Dämpfungskörper 2 bekannt, die aus einem oder mehreren Gummiwerkstoffen hergestellt sind. Insbesondere kennt man Dämpfungskörper 2, die zumindest teilweise aus Naturkautschuk hergestellt sind, die jedoch kein für Schienenfahrzeuge erforderliches Brandverhalten zeigen, da sie zu leicht brennbar sind.

Die Dämpfungskörper 2 können, wie in den Figuren 1 und 3 gezeigt ist, konzentrisch um eine Längsachse 12 des Federelements 1 herum angeordnet sein. Alternativ oder ergänzend dazu können die Dämpfungskörper konisch ausgebildet sein, wobei sich ein Querschnittsdurchmesser der Dämpfungskörper in Kompressionsrichtung 10 verringert, insbesondere kontinuierlich verringert.

Jeder Dämpfungskörper 2 weist an seiner Außenseite eine Deckschicht 3 auf. Es sind zudem bereits zahlreiche Materialien und Zusammensetzungen zur Herstellung von brandhemmenden Deckschichten 3 bekannt, die ebenfalls bei der vorliegenden Erfindung zum Einsatz kommen können. Die brandhemmende Deckschicht 3 kann dabei beispielsweise steifer und/oder weniger elastisch als der Dämpfungskörper 2 sein. Es kann vorgesehen sein, dass ein Elastizitätsmodul des Dämpfungskörpers 2 niedriger als ein Elastizitätsmodul der Deckschicht 3 ist. Somit würde die Deckschicht 3 bei regelmäßiger mechanischer Belastung, beispielsweise bei der Kompression des Federelements 1, schneller verschleißen als der Dämpfungskörper 2. Dies hätte zur Folge, dass eine erforderliche Lebensdauer des Federelements 1 aufgrund des Verschleißes der Deckschicht 3 nicht erreichbar wäre.

Beispielseite kann es vorgesehen sein, dass die Deckschicht 3 wenigstens teilweise oder größtenteils aus wenigstens einem Elastomer, insbesondere aus einer Gummimischung hergestellt ist. Ein besonders vorteilhaftes Material zur Herstellung kann zum Beispiel Chloropren-Kautschuk in oben beschriebener Zusammensetzung sein, da seine Brandschutzeigenschaften geeignet sind, um ein Federelement herzustellen, das die DIN EN 45545-2 erfüllt.

Die Deckschichten 3 weisen daher jeweils eine Ausgleichszone 4 auf, wie in den Figuren 2 und 4 zu erkennen ist. Die Ausgleichszonen 4 sind dazu eingerichtet, dass sie bei einer Belastung des Federelements 1 eine Falten- und/oder Rissbildung in der Deckschicht 3 aufgrund der auf die Deckschicht 3 wirkenden Belastungen verhindert.

Die Ausgleichszone 4 der Deckschicht 3 des Federelements 1 ist durch wenigstens eine Unterbrechung in der Deckschicht 3 ausgebildet, so dass ein Freiraum 5 zwischen wenigstens zwei Deckschichtbereichen 11 der Deckschicht 3 im unbelasteten Zustand des Federelements 1 und/oder im unbelasteten Zustand der Deckschicht 3 vorliegt. Durch die Ausgleichszonen 4 kann somit eine Faltenbildung in der Deckschicht 3 verhindert werden, sobald ein Belastungszustand vorliegt. Durch die Unterbrechung kann somit eine Rille 13 ausgebildet sein.

Durch die Deckschichten 3 können die Dämpfungskörper 2, insbesondere unabhängig von einer Brennbarkeit der Dämpfungskörper 2, vor Feuer geschützt werden, indem die Deckschichten 3 die Dämpfungskörper 2 nach außen abschirmen.

Die Deckschicht 3 und der Dämpfungskörper 2 können zu einem Verbundelement 6 miteinander vernetzt sein, so dass eine zerstörungsfreie Trennung und/oder ein Ablösen der Deckschicht 3 vom Dämpfungskörper 2 nicht möglich ist.

Zwei benachbarte Dämpfungskörper 2 können durch ein Stützelement 8, dass beispielsweise eine Hülsenform aufweisen kann, getragen und/oder voneinander getrennt sein. Das Federelement 1 weist mehrere, insbesondere hülsenförmige Stützelemente 8 auf. Die Stützelemente 8 können eine konische, insbesondere zur Form der Dämpfungskörper 2 korrespondierende, Form aufweisen. Die Stützelemente 8 können beispielsweise steif, insbesondere aus Metall ausgebildet sein.

Die Deckschicht 3 kann eine Schichtdicke, insbesondere eine reguläre Schichtdicke außerhalb der Ausgleichszone 4, von 1 mm bis 5 mm aufweisen. Beispielsweise kann es sich dabei um eine durchschnittliche Schichtdicke handeln, wenn die Schichtdicke nicht exakt gleichmäßig ausbildbar ist. Insbesondere kann die Deckschicht 3 maximal vier Millimeter dick, insbesondere maximal drei Millimeter dick, insbesondere maximal zwei Millimeter dick, insbesondere maximal ein Millimeter dick, ausgebildet sein.

Wie in den Figuren 3 und 4 zu erkennen ist, ist die Deckschicht 3 im belasteten Zustand des Federelements 1 wenigstens teilweise, vorzugsweise vollständig, geschlossen. Im belasteten Zustand ist somit eine vorzugsweise nach außen hin geschlossene Deckschicht 3 ausgebildet, da die einzelnen Deckschichtbereiche 11 der Deckschicht 3 zusammengeschoben sind und wenigstens teilweise aneinander anliegen.

Das Federelement 1 kann eine Aufnahme 9 aufweisen, die sich vorzugsweise in Längsrichtung, insbesondere entlang der Längsachse 12 des Federelements 1 erstreckt und zur Kopplung des Federelements mit einem weiteren Bauteil, beispielsweise eines Drehgestells, dient.

Der wenigstens eine Freiraum 5 kann beispielsweise in Form einer Rille 13 oder mehrerer Rillen 13 in der Deckschicht 3 ausgebildet sein. Die Rillen 13 können beispielsweise parallel und/oder quer zueinander angeordnet sein. Vorzugsweise können die Rillen 13 quer, insbesondere senkrecht, zu einer Kompressionsrichtung des Federelements 1 verlaufen. Die Rillen 13 können beispielsweise nahezu über die gesamte durch die Deckschicht gebildete Oberfläche des Federelements 1 verteilt ausgebildet sein. Vorzugsweise kann zwischen zwei benachbarten Stützelementen 8 jeweils eine Rille 13 ausgebildet sein. Die Rillen 13 können somit jeweils zwischen zwei Deckschichtbereichen 11 der Deckschicht 3 ausgebildet sein.

Der Begriff Freiraum 5 kann sich auf eine Materialausnehmung in der Deckschicht 3 beziehen.

Im Falle der Ausbildung des Federelements 1 als eine Konusfeder 7 können die Rillen 13 konzentrisch ausgebildet sein.

Besonders bevorzugt kann ein Freiraum 5, insbesondere die Rille 13 oder die Rillen, jeweils eine konstante oder im Wesentlichen konstante Breite aufweisen. Der Abstand zwischen zwei Deckschichtbereichen, also der Freiraum 5 der Ausgleichszone 4, kann somit durchgehend gleich oder nahezu durchgehend gleich sein. Insbesondere kann eine Abweichung zwischen einem geringsten Abstand und einem maximalen Abstand maximal 25%, insbesondere maximal 20%, insbesondere maximal 15%, insbesondere maximal 10%, insbesondere maximal 5%, betragen.

Unter einer niedrigsten Last kann der Freiraum 5, insbesondere die Rillen 13, derart geschlossen sein, dass in der brandhemmenden Deckschicht 3 im zusammengeschobenen Bereich mindestens eine geschlossene Schichtdicke von 1 mm vorliegt. Die übrige Schichtdicke der Deckschicht 3 außerhalb des zusammengeschobenen Bereichs kann davon abweichen, insbesondere kann sie dicker sein, wie zum Beispiel mindestens 3 mm, insbesondere 4 mm. Im Verlauf einer weiteren Einfederung schließt sich dann die Rille 13 vollständig und/oder die Kontaktbreite von mind. 1 mm Breite "wandert" innerhalb der zusammengedrückten Stirnfläche und stellt somit eine geschlossene Brandschutzhülle dar.

Ein Abstand im unbelasteten Zustand zwischen zwei benachbarten Deckschichtbereichen 11 kann mindestens 0,5 mm, insbesondere mindestens 1 mm, insbesondere mindestens 2 mm, insbesondere mindestens 3 mm, insbesondere mindestens 4 mm, insbesondere mindestens 5 mm, betragen.

Die Erfindung betrifft also insbesondere ein Federelement 1 zur Schwingungsdämpfung und/oder Federung eines Schienenfahrzeugs, mit wenigstens einem komprimierbaren, insbesondere brennbaren, Dämpfungskörper 2 und wenigstens einer den Dämpfungskörper 2 wenigstens teilweise abdeckenden brandhemmenden Deckschicht 3, wobei die Deckschicht 3 wenigstens eine Ausgleichszone 4 aufweist, die wenigstens zwei, in einem unbelasteten Zustand des Federelements 1 durch einen Freiraum 5 voneinander getrennte Deckschichtbereiche 11 aufweist, wobei die Deckschichtbereiche 11 im belasteten Zustand des Federelements 1 derart zusammengedrückt werden, dass sie mit ihren Kanten teilweise oder vollständig aneinander anliegen, und so eine, den Dämpfungskörper 2 vollständig umfassende und/oder insbesondere wenigstens an der Außenseite abdeckende Deckschicht 3 ausbilden, die den gewünschten Brandschutz sicherstellt.

### Bezugszeichenliste

- 1: Federelement
- 2: Dämpfungskörper
- 3: Deckschicht
- 4: Ausgleichszone
- 5: Unterbrechung; Freiraum
- 6: Verbundelement; Verbundkörper
- 7: Konusfeder
- 8: Stützelement; Hülse
- 9: Aufnahme
- 10: Kompressionsrichtung
- 11: Deckschichtbereich
- 12: Längsachse des Federelements
- 13: Rille

## Patentansprüche

1. Federelement (1) zur Schwingungsdämpfung und/oder Federung, mit wenigstens einem elastischen Dämpfungskörper (2) und wenigstens einer auf dem Dämpfungskörper (2) angeordneten, brandhemmenden Deckschicht (3), **dadurch gekennzeichnet, dass** die Deckschicht (3) wenigstens eine Ausgleichszone (4) aufweist, wobei die Ausgleichszone (4) im belasteten Zustand des Federelements (1) zusammengedrückt wird, so dass eine Faltenbildung der Deckschicht (3) verhindert wird, dass die Deckschicht (3) und der Dämpfungskörper (2) zu einem Verbundelement (6) untrennbar vernetzt sind und dass die Ausgleichszone (4) durch eine Unterbrechung (5) der Deckschicht (3) ausgebildet ist.

2. Federelement (1) nach Anspruch 1, **dadurch gekennzeichnet, dass** die Ausgleichszone (4) eine Rille (13) oder mehrere Rillen (13) aufweist oder durch diese ausgebildet ist.

3. Federelement (1) nach einem der vorstehenden Ansprüche, **dadurch gekennzeichnet, dass** der Dämpfungskörper (2) aus wenigstens einem Gummiwerkstoff hergestellt ist, wobei eine Elastizität des Gummiwerkstoffes des Dämpfungskörpers (2) höher als eine Elastizität der Deckschicht (3) ist.

4. Federelement (1) nach einem der vorstehenden Ansprüche, **dadurch gekennzeichnet, dass** die Deckschicht (3) teilweise oder größtenteils aus wenigstem einem Elastomer besteht, insbesondere wobei die Deckschicht (3) teilweise oder größtenteils aus Chloropren-Kautschuk besteht.

5. Federelement (1) nach einem der vorstehenden Ansprüche, **dadurch gekennzeichnet, dass** die Deckschicht (3) wenigstens ein Flammschutz- und/oder Säurefängermittel umfasst, insbesondere wobei das wenigstens eine Flammschutz- und/oder Säurefängermittel eines oder eine Kombination aus zwei oder mehr als zwei Flammschutz- und/oder Säurefängermitteln ausgewählt aus der Gruppe aus phosphorhaltigen Verbindungen, insbesondere Ammoniumpolyphosphat (APP), stickstoffhaltige Verbindungen, insbesondere Melamin, Polyol-Verbindungen, insbesondere Pentaerythrit, phosphathaltige Weichmacher, insbesondere Disflamoll DPO, anorganische Flammschutz- und/oder Säurefängermittel aus der Gruppe der Borate, insbesondere Zinkborat, der Gruppe der Hydroxide, insbesondere Aluminiumtrihydroxid und/oder Magnesiumhydroxid und/oder Boehmit, der Gruppe der Antimonverbindungen, insbesondere Antimontrioxid und/oder Antimonpentoxid, der Gruppe der Oxide, insbesondere Magnesiumoxid, der Gruppe der Nanoclays, Graphit, insbesondere expandierbares Graphit, ist.

6. Federelement (1) nach einem der vorstehenden Ansprüche, **dadurch gekennzeichnet, dass** die Deckschicht (3) außerhalb der Ausgleichszone (4) eine durchschnittliche Schichtstärke von 1 Millimeter bis 5 Millimeter aufweist, insbesondere dass die Deckschicht (3) maximal 4 Millimeter dick ausgebildet ist, insbesondere dass die Deckschicht (3) maximal 3 Millimeter dick ausgebildet ist, insbesondere dass die Deckschicht (3) maximal 2 Millimeter dick ausgebildet ist, insbesondere dass die Deckschicht (3) maximal 1 Millimeter dick ausgebildet ist.

7. Federelement (1) nach einem der vorstehenden Ansprüche, **dadurch gekennzeichnet, dass** die Deckschicht (3), insbesondere im eingebauten Zustand des Federelements (1), eine Außenschicht des Federelements (1) ausbildet.

8. Federelement (1) nach einem der vorstehenden Ansprüche, **dadurch gekennzeichnet, dass** die wenigstens eine Ausgleichszone (4) im Belastungszustand, insbesondere im maximalen Belastungszustand, teilweise oder vollständig geschlossen ist, so dass eine nach außen geschlossene Deckschicht (3) vorliegt.

9. Federelement (1) nach einem der vorstehenden Ansprüche, **dadurch gekennzeichnet, dass** es sich bei dem Federelement (1) um ein Federelement (1) zur Schwingungsdämpfung und/oder Federung von Schienenfahrzeugen handelt und/oder dass es sich um wenigstens ein Federelement (1) aus der Gruppe aus hochbelasteten Bauteilen, wie Primär-Konusfeder (7), Sekundärzusatzfeder, Achsfeder und/oder Luftfederbalg, handelt.

10. Verwendung eines Federelements (1) nach einem der Ansprüche 1 bis 9 zur Schwingungsdämpfung und/oder Federung von Schienenfahrzeugen, vorzugsweise wobei es sich um wenigstens ein Federelement (1) aus der Gruppe aus hochbelasteten Bauteilen, wie Primär-Konusfeder (7), Sekundärzusatzfeder, Achsfeder und/oder Luftfederbalg, handelt.

## Claims

1. Spring element (1) for vibration damping and/or suspension, comprising at least one elastic damping body (2) and at least one fire-retardant cover layer (3) arranged on the damping body (2), **characterized in that** the cover layer (3) comprises at least one compensation zone (4), wherein the compensation zone (4) is compressed when the spring element (1) is under load, thereby preventing the cover layer (3) from wrinkling, **in that** the cover layer (3) and the damping body (2) are inseparably bonded to form a composite element (6), and **in that** the compensation zone (4) is formed by a discontinuity (5) in the cover layer (3).

2. Spring element (1) according to claim 1, **characterized in that** the compensation zone (4) comprises one groove (13) or a plurality of grooves (13) or is formed by these.

3. Spring element (1) according to one of the preceding claims, **characterized in that** the damping body (2) is made of at least one rubber material, wherein the elasticity of the rubber material of the damping body (2) is higher than the elasticity of the cover layer (3).

4. Spring element (1) according to one of the preceding claims, **characterized in that** the cover layer (3) consists partly or largely of at least one elastomer, in particular wherein the cover layer (3) consists partly or largely of chloroprene rubber.

5. Spring element (1) according to one of the preceding claims, **characterized in that** the cover layer (3) comprises at least one flame retardant and/or acid scavenger, in particular wherein the at least one flame retardant and/or acid scavenger is one or a combination of two or more than two flame retardants and/or acid scavengers selected from the group consisting of phosphorus-containing compounds, in particular ammonium polyphosphate (APP), nitrogen-containing compounds, in particular melamine, polyol compounds, in particular pentaerythritol, phosphate-containing plasticizers, in particular Disflamoll DPO, inorganic flame retardants and/or acid scavengers from the group of borates, in particular zinc borate, the group of hydroxides, in particular aluminum trihydroxide and/or magnesium hydroxide and/or boehmite, the group of antimony compounds, in particular antimony trioxide and/or antimony pentoxide, the group of oxides, in particular magnesium oxide, the group of nanoclays, graphite, in particular expandable graphite.

6. Spring element (1) according to one of the preceding claims, **characterized in that** the cover layer (3) outside the compensation zone (4) has an average layer thickness of 1 millimeter to 5 millimeters, in particular **in that** the cover layer (3) is formed to have a maximum thickness of 4 millimeters, in particular in that the cover layer (3) is formed to have a maximum thickness of 3 millimeters, in particular **in that** the cover layer (3) is formed to have a maximum thickness of 2 millimeters, in particular **in that** the cover layer (3) is formed to have a maximum thickness of 1 millimeter.

7. Spring element (1) according to one of the preceding claims, **characterized in that** the cover layer (3), particularly when the spring element (1) is installed, forms an outer layer of the spring element (1).

8. Spring element (1) according to one of the preceding claims, **characterized in that** the at least one compensation zone (4) is partially or completely closed under load, particularly under maximum load, so that a cover layer (3) closed to the outside is present.

9. Spring element (1) according to one of the preceding claims, **characterized in that** the spring element (1) is a spring element (1) for vibration damping and/or suspension of rail vehicles and/or **in that** it is at least one spring element (1) from the group of highly loaded components, such as a primary conical spring (7), secondary auxiliary springs, axle springs, and/or air spring bellows.

10. Use of a spring element (1) according to one of claims 1 to 9 for vibration damping and/or suspension of rail vehicles, preferably wherein it is at least one spring element (1) from the group of highly loaded components, such as a primary conical spring (7), a secondary auxiliary spring, an axle spring, and/or an air spring bellows.

## Revendications

1. Élément de ressort (1) pour l'amortissement de vibrations et/ou la suspension, avec au moins un corps d'amortissement élastique (2) et au moins une couche de couverture ignifuge (3) disposée sur le corps d'amortissement (2), **caractérisé en ce que** la couche de couverture (3) comporte au moins une zone de compensation (4), laquelle zone de compensation (4) est comprimée quand l'élément de ressort (1) est contraint de façon à empêcher la formation de plis dans la couche de couverture (3), **en ce que** la couche de couverture (3) et le corps d'amortissement (2) sont polymérisés de façon indissociable pour former un élément composite (6) et **en ce que** la zone de compensation (4) est formée par une solution de continuité (5) de la couche de couverture (3).

2. Élément de ressort (1) selon la revendication 1, **caractérisé en ce que** la zone de compensation (4) comporte une rainure (13) ou plusieurs rainures (13) ou est formée par celles-ci.

3. Élément de ressort (1) selon l'une des revendications précédentes, **caractérisé en ce que** le corps d'amortissement (2) est fait d'au moins un matériau caoutchouteux, l'élasticité du matériau caoutchouteux du corps d'amortissement (2) étant plus élevée que l'élasticité de la couche de couverture (3).

4. Élément de ressort (1) selon l'une des revendications précédentes, **caractérisé en ce que** la couche de couverture (3) se compose partiellement ou en majeure partie d'au moins un élastomère, la couche de couverture (3) se composant en particulier, partiellement ou en majeure partie, de caoutchouc chloroprène.

5. Élément de ressort (1) selon l'une des revendications précédentes, **caractérisé en ce que** la couche de couverture (3) comprend au moins un agent antifeu et/ou fixateur d'acide, l'au moins un agent antifeu et/ou fixateur d'acide étant un agent ou une combinaison de deux ou plusieurs agents antifeu et/ou fixateur d'acide choisis parmi un groupe comprenant des composés phosphorés, en particulier le polyphosphate d'ammonium (APP), des composés azotés, en particulier la mélamine, des polyols, en particulier le pentaérythrite, des plastifiants phosphatés, en particulier le Disflamoll DPO, des agents antifeu et/ou fixateur d'acide inorganiques du groupe des borates, en particulier le borate de zinc, du groupe des hydroxydes, en particulier le trihydroxyde d'aluminium et/ou l'hydroxyde de magnésium et/ou la boehmite, du groupe des composés d'antimoine, en particulier le trioxyde d'antimoine ou le pentoxyde d'antimoine, du groupe des oxydes, en particulier l'oxyde de magnésium, du groupe des nanoargiles, le graphite, en particulier le graphite expansible.

6. Élément de ressort (1) selon l'une des revendications précédentes, **caractérisé en ce que** la couche de couverture (3) présente, en dehors de la zone de compensation (4), une épaisseur de couche moyenne de 1 millimètre à 5 millimètres, en particulier **en ce que** la couche de couverture (3) mesure au maximum 4 millimètres d'épaisseur, en particulier **en ce que** la couche de couverture (3) mesure au maximum 3 millimètres d'épaisseur, en particulier **en ce que** la couche de couverture (3) mesure au maximum 2 millimètres d'épaisseur, en particulier **en ce que** la couche de couverture (3) mesure au maximum 1 millimètre d'épaisseur.

7. Élément de ressort (1) selon l'une des revendications précédentes, **caractérisé en ce que** la couche de couverture (3) forme, en particulier dans l'état installé de l'élément de ressort (1), une couche extérieure de l'élément de ressort (1).

8. Élément de ressort (1) selon l'une des revendications précédentes, **caractérisé en ce que** l'au moins une zone de compensation (4) est partiellement ou complètement fermée dans l'état contraint, en particulier dans l'état de contrainte maximale, de sorte qu'il se crée une couche de couverture (3) fermée vers l'extérieur.

9. Élément de ressort (1) selon l'une des revendications précédentes, **caractérisé en ce que** l'élément de ressort (1) est un élément de ressort (1) pour l'amortissement de vibrations et/ou la suspension de véhicules ferroviaires et/ou **en ce qu'**il s'agit d'au moins un élément de ressort (1) appartenant au groupe des composants soumis à de fortes contraintes, comme un ressort conique primaire (7), un ressort secondaire supplémentaire, un ressort d'essieu et/ou un soufflet de suspension pneumatique.

10. Utilisation d'un élément de ressort (1) selon l'une des revendications 1 à 9 pour l'amortissement de vibrations et/ou la suspension de véhicules ferroviaires, de préférence l'au moins un élément de ressort (1) faisant partie du groupe des composants soumis à de fortes contraintes, comme un ressort conique primaire (7), un ressort secondaire supplémentaire, un ressort d'essieu et/ou un soufflet de suspension pneumatique.
